# DEMANDE DE BREVET EUROPEEN

(11) **EP 1 669 690 A1**
(43) Date de publication de la demande: **14.06.2006**
(21) Numéro de dépôt: 05292316.6
(22) Date de dépôt: 02.11.2005
(51) Int. Cl.: F24H 3/04

(54) **Appareil de chauffage à brûleur comportant un ventilateur à alimentation électrique autonome.**

(30) Priorité: 07.12.2004 FR 0412995
(71) Demandeur: Compagnie des Gaz de Pétrole Primagaz, Société Anonyme, 75017 Paris (FR)
(72) Inventeur: Bouvier, Daniel, 75011 Paris (FR)
(74) Mandataire: Eidelsberg, Victor Albert

(57) **Abrégé**

Cet appareil de chauffage comprend une source (4) de chaleur en relation d'échange thermique avec la face chaude d'un thermoélément (9), un groupe motoventilateur (12, 14) dont le moteur (14) est alimenté par le thermoélément (9), un échangeur de chaleur (10) ayant une sortie pour de l'air mis en mouvement par le ventilateur (12). La source de chaleur est un brûleur (4) à gaz, le thermélément (9) est en dehors de l'espace se trouvant au-dessus du brûleur (4) et de la chaleur est apportée au thermoélément (9) par un dispositif (5 à 7) d'apport de chaleur.

## Description

La présente invention se rapporte aux appareils de chauffage à brûleur et plus particulièrement aux appareils de chauffage à ventilateur de propulsion d'air chaud, qui sont autonomes en étant aptes non seulement à fournir la chaleur nécessaire au chauffage d'une pièce, mais aussi le courant électrique nécessaire au fonctionnement du ventilateur.

Au brevet des Etats-Unis d'Amérique n° 5 544 488, on décrit un ventilateur destiné à être associé à une source de chaleur quelconque. L'ensemble constitue ainsi un appareil de chauffage comprenant une source de chaleur en relation d'échange thermique avec la face chaude d'un thermoélément produisant du courant électrique lorsqu'une différence de température entre sa face chaude et l'une de ses faces, à maintenir froide, dépasse une valeur donnée. Le thermoélément alimente en courant électrique le moteur électrique d'un groupe motoventilateur. Un échangeur de chaleur ayant une entrée et une sortie pour de l'air mis en mouvement par le ventilateur est en relation d'échange thermique avec la face à maintenir froide du thermoélément.

Au brevet des Etats-Unis d'Amérique n°5 544 488, on rappelle qu'il existe un ventilateur ayant ce type d'agencement, mais dont le fonctionnement n'est pas stable. Il faut pour empêcher que la température de la face chaude du thermoélément ne s'élève trop et ne le détruise, écarter, à temps manuellement la source de chaleur. Le brevet se propose d'y remédier d'une part par un échangeur de chaleur en un matériau approprié et d'une dimension, masse et forme appropriées, et d'autre part, par deux dispositifs qui écartent le thermoélément de la source de chaleur lorsque la température menace de s'élever au-delà d'une limite supérieure L'un de ces moyens consiste à prévoir un déplacement mécanique à l'aide d'une vis entre la source de chaleur et le thermoélément. Ce moyen, bien loin d'améliorer ce qui était prévu auparavant, est pire. Non seulement il faut toujours une manoeuvre manuelle avec danger de se brûler, mais encore la manoeuvre manuelle est rendue plus lente et plus compliquée qu'auparavant et on ne sait pas de combien de tours de vis il convient d'écarter le thermoélément de la source de chaleur pour revenir à une température acceptable. Le deuxième moyen consiste à supporter le thermoélément d'un seul bloc avec le ventilateur. Lorsque la température du thermoélément s'élève, un bilame écarte automatiquement le thermoélément et le ventilateur qui fait corps avec lui de la source de chaleur, en le soulevant.

Cette solution séduisante en apparence rend ce ventilateur tout à fait inapte à être utilisé pour effectuer un chauffage soufflant d'une pièce. Comme le ventilateur doit être soulevé par un simple bilame, il doit être extrêmement léger et ne peut pas avoir un débit suffisant pour chauffer une pièce entière. Le dispositif décrit au brevet 5 544 488 est du domaine du gadget ; il ne peut pas constituer un appareil de chauffage efficace.

L'invention vise au contraire un appareil de chauffage dans lequel le problème de la protection du thermoélément vis-à-vis d'une trop grande élévation de la température est résolu automatiquement, tout en ayant un appareil donnant, par un ventilateur de grande dimension, un débit d'air pulsé suffisant pour chauffer la pièce et comparable aux ventiloconvecteurs électriques existant. L'invention utilise au mieux la source de chaleur.

L'invention est définie à la revendication 1. Des perfectionnements font l'objet des revendications dépendantes.

Suivant l'invention deux plans issus des bords opposés du brûleur (ou tangents à ces bords) et divergents vers le haut chacun d'un angle inférieur à 30° et mieux à 15° par rapport à la verticale, définissent entre eux un espace d'exclusion du thermoélement, dans lequel il ne se trouve pas. Ce n'est pas le cas aux JP 61153441A et JP 62098149A.

On ne met ainsi à profit essentiellement ni le matériau, ni la dimension, ni la masse ni la forme d'un échangeur de chaleur, mais on joue sur la position relative et notamment la position décalée dans un plan horizontal de la source de chaleur d'une part et du thermoélément d'autre part et sur le fait que l'on prévoit un dispositif d'apport de chaleur au thermoélément distinct du brûleur et décalé notamment dans le plan horizontal de celui-ci. On peut ainsi envoyer au thermoélément une quantité donnée de chaleur, limitée par rapport à la quantité de chaleur totale fournie par le brûleur et destinée à chauffer toute la pièce. Cette quantité de chaleur envoyée au thermoélément peut représenter par exemple seulement de 10 à 30 % de la quantité de chaleur fournie par le brûleur. En dissociant les deux quantités de chaleur, on rend possible la protection du thermoélément vis-à-vis d'une élévation trop grande de la température.

Suivant un premier mode de réalisation, le dispositif d'apport de chaleur au thermoélément est constitué d'un brûleur auxiliaire distinct du brûleur qui constitue la source de chaleur. Ce mode de réalisation présente le grand avantage de permettre de moduler la quantité de combustible envoyée au brûleur, en sorte que l'on peut moduler la quantité de chaleur envoyée par le brûleur dans la pièce à chauffer, puisque le brûleur auxiliaire fournit à soi seul la chaleur nécessaire au fonctionnement du thermoélément et du motoventilateur. Suivant un autre mode de réalisation plus simple et moins coûteux, le dispositif d'apport de chaleur est constitué d'un élément de transmission de la chaleur, dont une première partie d'extrémité est soumise aux produits de combustion du brûleur, tandis qu'une seconde partie d'extrémité reliée à la première partie par une partie intermédiaire est en relation d'échange thermique avec la face chaude du thermoélément. On peut ainsi à l'aide d'un seul brûleur répartir la chaleur qu'il fournit en deux quantités, l'une servant à faire fonctionner l'ensemble du thermoélément et du motoventilateur et l'autre à chauffer principalement l'air de la pièce et notamment, lorsque la sortie de l'échangeur est dirigée au-dessus de la première partie d'extrémité, de préférence en étant sensiblement horizontale, l'air refoulé par le ventilateur. Or, chauffer un courant d'air horizontal, notamment en partie basse d'une pièce, permet de mieux homogénéiser la température de la pièce. On lutte ainsi au mieux contre le mouvement ascensionnel de l'air chaud.

De préférence, le brûleur et le dispositif d'apport de chaleur sont fixés à demeure à l'appareil de chauffage. L'ensemble constitue ainsi un appareil entièrement autonome, dont les éléments sont bien adaptés les uns aux autres de fabrication à l'usine.

Une façon simple de bien répartir la chaleur entre la première partie d'extrémité et la deuxième partie d'extrémité consiste à faire en sorte que la superficie d'une section transversale de la première partie d'extrémité soit supérieure à la superficie d'une section transversale de la partie intermédiaire.

La partie intermédiaire ainsi chauffée peut émettre du rayonnement infrarouge en direction de l'échangeur de chaleur, ce qui peut nuire au bon fonctionnement de celui-ci. Suivant un perfectionnement, l'échangeur de chaleur est protégé thermiquement de la partie intermédiaire par un écran. L'écran s'étend ainsi entre l'échangeur de chaleur et la partie intermédiaire et empêche que du rayonnement infrarouge issu de la partie intermédiaire n'atteigne l'échangeur de chaleur. L'écran peut être constitué par une plaque métallique polie, par exemple en acier inoxydable. Ce peut être aussi ou en plus une gaine isolante entourant la partie intermédiaire. En outre, l'écran ou la gaine isolante empêche que l'air tiède qui sort de l'échangeur de chaleur et qui est destiné à réchauffer la pièce et à entraîner les gaz et produits de combustion issus du brûleur ne refroidissent la partie intermédiaire et ne portent ainsi gravement atteinte à la stabilité de fonctionnement de l'ensemble de l'appareil en faussant la quantité de chaleur qui doit arriver normalement au thermoélément.

Pour des raisons de légèreté permettant ainsi de rendre l'appareil plus facilement portatif, on préfère que l'élément de transmission soit en aluminium ou en un autre alliage léger. Mais ce peut être aussi un caloduc coûteux mais permettant d'obtenir plus vite la mise en route de l'appareil.

Pour obtenir une sécurité supplémentaire dans le cas d'une élévation intempestive de la température de la face chaude du thermoélément, l'appareil comprend un deuxième circuit électrique comprenant un interrupteur thermique en position normalement fermée. Cet interrupteur est en contact thermique avec l'échangeur de chaleur, avec le thermoélément ou avec la deuxième partie d'extrémité. Une électrovanne qui cesse d'être excitée par un thermocouple lorsque l'interrupteur s'ouvre, ferme un conduit d'alimentation en combustible du brûleur. Si la température s'élève trop, le brûleur, y compris le cas échéant le brûleur auxiliaire, n'est plus ou ne sont plus alimentés. Mais cependant , le ventilateur continue à être alimenté en courant pendant une certaine durée en dissipant les calories qui menacent de trop élever la température du thermoélément et contribue ainsi à assurer encore davantage que le thermoélément ne soit pas mis en danger.

Suivant un perfectionnement permettant d'abaisser beaucoup le coût de l'appareil de chauffage, un convertisseur élévateur en courant de tension continu est monté dans un premier circuit électrique allant du thermoélément au moteur. Le convertisseur élève par exemple la tension à douze volts qui est la tension habituelle des moteurs de groupe motoventilateur du commerce, avec la possibilité d'utiliser des thermoéléments moins coûteux qui donnent une tension de trois à cinq volts.

Le brûleur peut être un brûleur à fluide, notamment à gaz ou à liquide, par exemple un brûleur à propane ou à butane, un brûleur à pétrole lampant, un brûleur au gaz naturel, un brûleur à essence. Ce peut être aussi un brûleur à catalyseur au lieu d'être un brûleur à flamme nue.

Le thermoélément est un module thermoélectrique, dit à effet Seebeck. Ce module thermoélectrique est constitué d'un réseau de couples semiconducteurs (pastilles PN) montées électriquement en série et thermiquement en parallèle pris en sandwich entre des substrats céramiques métallisés. On peut trouver des thermoéléments de ce type chez la Société Melcor, Frigicheaps, Etats-Unis d'Amérique et chez la Société Tellurex Corporation, Michigan, Etats-Unis d'Amérique.

Aux dessins annexés, donnés uniquement à titre d'exemple :
la figure 1 est un schéma d'un premier mode de réalisation d'un appareil de chauffage suivant l'invention ;
la figure 2 est un vue en perspective éclatée d'une partie de l'appareil de la figure 1, et
la figure 3 est une variante de l'appareil de chauffage suivant l'invention.

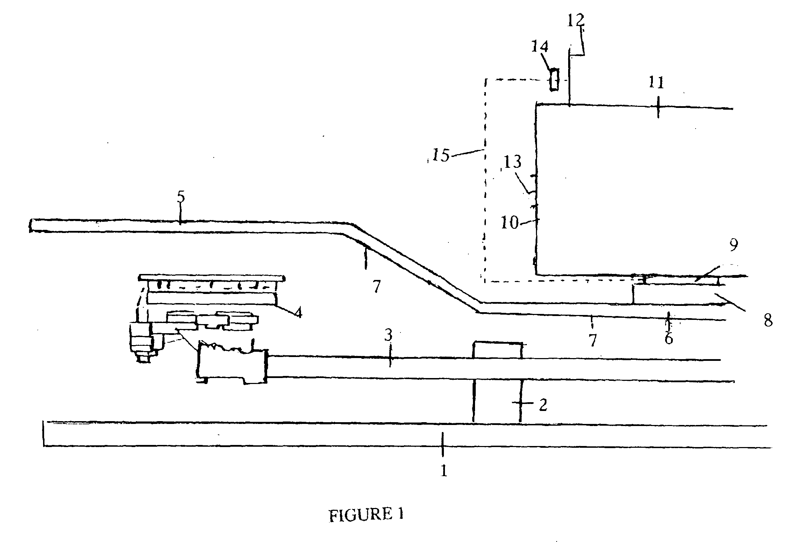

L'appareil de chauffage représenté à la figure 1 comprend un bâti 1 duquel part un plot 2 de pose d'un tuyau 3 de gaz alimentant un brûleur 4 à butane. Au-dessus du brûleur est placée une première partie 5 d'extrémité d'un élément de transmission. La partie 5 est reliée à l'autre partie 6 d'extrémité du brûleur par une partie 7 intermédiaire. La partie 5 est circulaire et a le même axe de révolution verticale que le brûleur 4. L'élément 5, 6, 7 est en aluminium A5 d'une pureté de 99 %. L'épaisseur de l'élément est de 6 mm. La partie 5 est à une distance du brûleur de 20 mm. Le diamètre de la partie 5 est de 180 mm. La largeur des parties 6 et 7 est de 120 mm. Le brûleur 4 a un éjecteur de 0,8 sous 28 millibar de butane donnant un débit de 190 g/h ce qui donne une puissance thermique de 2,6 kw environ (pouvoir calorifique supérieur).

En dehors de l'espace se trouvant au-dessus du brûleur 4, en se trouvant au-dessus de la partie 6 d'extrémité, est fixé par l'intermédiaire d'une plaque 8 en cuivre, un thermoélément 9. La face chaude inférieure du thermoélément 9 est en contact avec la plaque 8, tandis que sa face à maintenir froide supérieure est en contact avec un échangeur de chaleur 10. En régime stationnaire, la température de la face chaude du thermoélément pour une température ambiante de 20° C est comprise entre 180 et 185° C, la température pouvant s'élever jusqu'à une température de 200 à 210° C sans endommager le thermoélément. La température de la face froide est dans les mêmes conditions que ci-dessus de 50° C.

L'échangeur de chaleur est un échangeur à ailettes verticales d'une surface de 2 553 cm2, constitué d'un bloc semelle en aluminium de 152 x 152 de 12 mm d'épaisseur comportant 28 ailettes 10 en aluminium de 1,5 mm d'épaisseur de dimension 60 x 152 mm. Les ailettes sont collées dans des rainures à l'aide d'une colle conductrice de la chaleur.

La plaque 8 a une épaisseur de 10 mm et des dimensions de 42 x 120 mm, légèrement supérieures à celles du thermoélément 9.

Une entrée 11 d'air est ménagée à la partie supérieure de l'échangeur de chaleur 10. Un ventilateur 12 refoule de l'air ambiant dans l'échangeur de chaleur 10 par l'entrée 11, cet air après s'être réchauffé sur la face chaude du thermoélément sortant par une sortie 13 circulaire d'axe horizontal se trouvant au-dessus du plan de la partie 5.

Le ventilateur 12 fait partie d'un groupe motoventilateur dont le moteur 14 est alimenté en électricité par une ligne 15 reliant le thermoélément 9 au moteur 14.

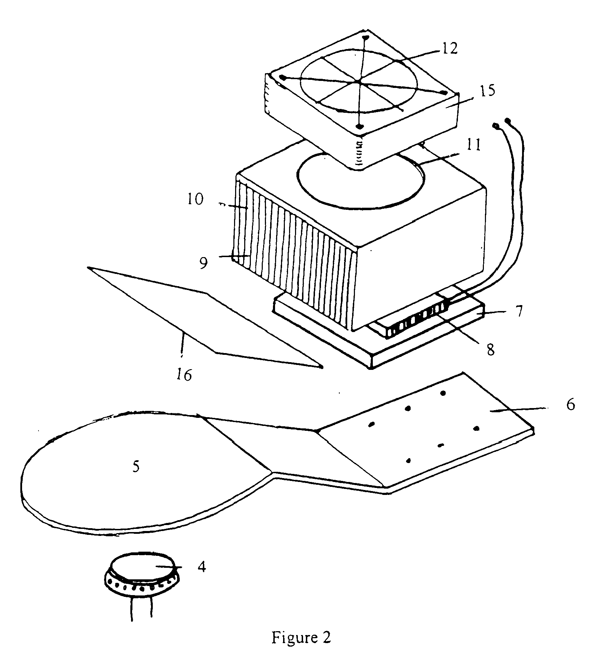

Bien que cela ne soit pas représenté à la figure 1, mais comme représenté à la figure 2, un écran 16 incliné sur l'horizontal d'un angle de 35° environ empêche que du rayonnement infrarouge issu des parties 5 et 7 n'atteigne l'échangeur de chaleur 11. Cet écran empêche aussi que l'air réchauffé sortant par la sortie 13 ne refroidisse les parties 5 et 7 d'une manière difficile à maîtriser et de toute façon contraire au but recherché, puisque ces parties 5 et 7 sont destinées à conduire une quantité déterminée de chaleur dans la partie 6 pour que celle-ci maintienne chaude, la face chaude du thermoélément 9. L'écran 16 est constitué d'une plaque en inox. Il pourrait être aussi constitué de fibres céramiques contenant par exemple 75 % AL₂O₃ et de 25 % SiO₂, lesquelles pourraient aussi constituer une gaine calorifuge pour les parties 5 et 7.

L'élément 5, 6, 7 de transmission de la chaleur est fixé à demeure au bâti 1 de l'appareil de chauffage par des vis.

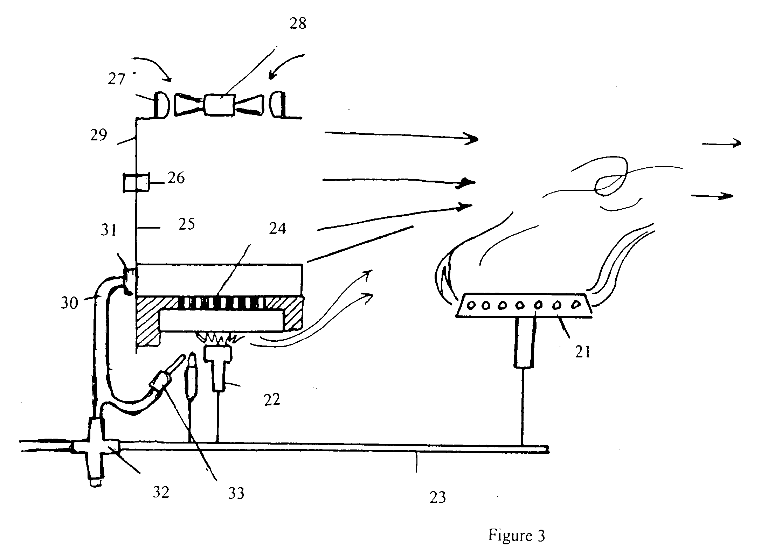

L'appareil de chauffage représenté à la figure 3 comporte un brûleur 21 servant de source de chaleur et un brûleur 22 auxiliaire alimenté tous deux par un conduit 23 de gaz butane. Au-dessus du brûleur 22 se trouve un thermoélément 24 qui alimente par une ligne 25, sur laquelle est monté un convertisseur 26 élévateur de tension en courant continu, le moteur 27 d'un groupe motoventilateur dont le ventilateur 28 est monté à l'entrée d'air d'un échangeur 29 de chaleur du même type que dans le premier mode de réalisation et dont la sortie d'air est également dirigée horizontalement, en sorte que l'air vient passer horizontalement au-dessus du brûleur 21.

Du thermoélément 24 part également une ligne 30 sur laquelle est monté un interrupteur thermique 31 en position normalement fermée qui est en contact avec l'échangeur de chaleur 25 ou avec le thermoélement 24. Sur le conduit 23 d'alimentation, est montée une électrovanne 32 qui cesse d'être excitée par un thermocouple 33 lorsque l'interrupteur 31 s'ouvre, l'électrovanne fermant alors le conduit 23 d'alimentation en combustible des brûleurs 21, 22.

## Revendications

1. Appareil de chauffage comprenant
- une source (4) de chaleur en relation d'échange thermique avec la face chaude d'un thermoélément (9) produisant du courant électrique lorsqu'une différence de température entre sa face chaude et l'une de ses faces à maintenir froide, dépasse une valeur donnée,
- un groupe motoventilateur dont le moteur (14) électrique est alimenté en courant électrique par le thermoélément (9),
- un échangeur de chaleur (10) ayant une entrée (11) et une sortie (13) pour de l'air mis en mouvement par le ventilateur (12) et en relation d'échange thermique avec la face, à maintenir froide, du thermoélément (9),
**caractérisé en ce que** la source (4) de chaleur est un brûleur à gaz, le thermoélément (9) est en dehors de l'espace se trouvant au-dessus du brûleur (4) en en étant décalé dans un plan horizontal et il est prévu dans l'espace se trouvant au-dessous du thermoélément (9) un dispositif (5 à 7) d'apport de chaleur au thermoélément (9) décalé du brûleur (4) dans le plan horizontal de celui-ci.

2. Appareil de chauffage suivant la revendication 1, **caractérisé en ce que** le dispositif d'apport de chaleur est un brûleur (22) auxiliaire distinct du brûleur (21) constituant la source de chaleur.

3. Appareil de chauffage suivant la revendication 1, **caractérisé en ce que** le dispositif d'apport de chaleur est constitué d'un élément (5 à 7) de transmission de la chaleur, dont une première partie (5) d'extrémité est soumise aux produits de combustion du brûleur, tandis qu'une seconde partie (7) d'extrémité, reliée à la première partie par une partie intermédiaire (6), est en relation d'échange thermique avec la face chaude du thermoélément (9).

4. Appareil de chauffage suivant l'une des revendications 1 à 3, **caractérisé en ce que** le brûleur et le dispositif d'apport de chaleur sont fixés à demeure à l'appareil de chauffage.

5. Appareil de chauffage suivant la revendication 3, **caractérisé en ce que** la superficie d'une section transversale de la première partie (5) d'extrémité est supérieure à la superficie d'une section transversale de la partie (7) intermédiaire.

6. Appareil de chauffage suivant l'une des revendications 3 à 5, **caractérisé en ce qu'**un écran (16) s'étend entre l'échangeur de chaleur (10) et la partie (7) intermédiaire.

7. Appareil de chauffage, suivant l'une des revendications 3 à 6, **caractérisé en ce que** l'élément de transmission est en aluminium ou alliage léger.

8. Appareil de chauffage suivant l'une quelconque des revendications précédentes, **caractérisée en ce que** la sortie de l'échangeur de chaleur (10) dirige l'air au-dessus de la première partie (5) d'extrémité, de préférence de façon sensiblement horizontale.

9. Appareil de chauffage, suivant l'une des revendications 1 à 8, **caractérisé par** un circuit électrique comprenant un interrupteur (31) thermique en position normalement fermée, en contact thermique avec l'échangeur de chaleur, le thermoélément ou la deuxième partie d'extrémité, et une électrovanne (32) qui cesse d'être excitée par un thermocouple (33) lorsque l'interrupteur (31) s'ouvre et qui ferme un conduit (23) d'alimentation en combustible du brûleur.

10. Appareil de chauffage suivant l'une des revendications 1 à 8, **caractérisé par** un convertisseur (26) élévateur de tension en courant continu monté dans un premier circuit électrique allant du thermoélément au moteur.

11. Appareil de chauffage suivant l'une des revendications 1 à 8, **caractérisée en ce que** le ventilateur est monté à l'entrée de l'échangeur de chaleur.
